# EUROPÄISCHE PATENTSCHRIFT

(11) **EP 3 005 887 B1**
(45) Veröffentlichungstag und Bekanntmachung des Hinweises auf die Patenterteilung: **09.12.2020**
(21) Anmeldenummer: 15188960.7
(22) Anmeldetag: 08.10.2015
(51) Int. Cl.: A23N 4/20

(54) **ANANASSCHNEIDER**
PINEAPPLE CUTTER
DISPOSITIF DESTINE A DECOUPER UN ANANAS

(30) Priorität: 08.10.2014 DE 202014104819 U
(43) Veröffentlichungstag der Anmeldung: 13.04.2016
(73) Patentinhaber: Völkl, Thomas, 83052 Bruckmühl (DE)
(72) Erfinder: Völkl, Thomas, 83052 Bruckmühl (DE)
(74) Vertreter: Weickmann & Weickmann PartmbB

(56) Entgegenhaltungen:
- WO-A1-2014/184298
- GB-A- 1 569 019
- US-A- 3 638 696
- US-A- 3 780 641
- US-A- 4 373 432
- US-A- 4 497 245

## Beschreibung

### I. Anwendungsgebiet

Die Erfindung betrifft einen Ananasschneider.

### II. Technischer Hintergrund

Ananasschneider werden genutzt, um schneller und gleichmäßiger als von Hand eine Ananas zum einen von ihrer äußeren Haut zu befreien, und gegebenenfalls auch den inneren, holzigen Strunk zu entfernen. Zusätzlich soll der verbleibende Hohlzylinder gegebenenfalls noch in einzelne radiale Scheiben aufgeschnitten werden, je nach gewünschter Verwendung.

Vor allem große Lebensmittel-Handelsketten fordern dabei gewichtsgleiche Portionen, beispielsweise einen immer gewichtsgleichen Hohlzylinder, aus einer Ananas herzustellen.

Dabei besteht das Problem, dass die Ananas als natürlich gewachsenes Produkt zwar für den Handel nach Größen klassifiziert wird, aber innerhalb einer Größen-Klasse die einzelnen Früchte immer noch unterschiedliche Abmessungen hinsichtlich Durchmesser und Länge und auch hinsichtlich Relation von Durchmesser zu Länge aufweisen, was nicht unerhebliche Probleme bei der maschinellen Handhabung und dem Zuschneiden oder Zurechtstanzen des gewünschten Hohlzylinders ergibt oder aber einen überproportional hohen Verschnitt:
Ist die Frucht zu klein, können an dem ausgestanzten Hohlzylinder bei nicht exakter Positionierung in dem Ananasschneider noch Schalenanteile vorhanden sein, was unverkäuflich ist.

Ist die ursprüngliche Frucht relativ groß, lässt sich problemlos der Hohlzylinder mit den gewünschten Abmessungen daraus herstellen, jedoch ist gleichzeitig der Verschnitt sehr groß, der im Einkauf aber mitbezahlt werden muss.

Zusätzlich soll ein solcher Ananasschneider für den gewerblichen Einsatz natürlich möglichst zuverlässig und wartungsarm funktionieren und eine hohe Arbeitsleistung erbringen.

In diesem Zusammenhang ist es bereits bekannt, eine kleine innere Stanzhülse und eine größere äußere Stanzhülse koaxial zueinander einzusetzen, um damit in Längsrichtung der Ananas, der Axialrichtung, mit der inneren Stanzhülse den Strunk auszustechen und mit der äußeren Stanzhülse die äußere Schale vom inneren Fruchtfleisch abzutrennen. Vorher oder nachher wird die Schale am vorderen und hinteren Ende der Ananas in Form von jeweils einer Kappe mit einem Messer abgetrennt.

Eine manuell bedienbare Ananas-Stanzmaschine ist aus der US 4,497,245 bekannt, mittels welcher aus einer Ananas, von der bereits eine vordere und hintere Kappe entfernt wurde, ein Hohlzylinder aus der Ananas gestanzt werden kann.

Aus der WO 2014/184 298 A1 ist eine Vorrichtung zur Verarbeitung einer Ananas bekannt, bei der die in einer Klemmvorrichtung gehaltene Ananas von einer ersten Verarbeitungsstation zur Entfernung der Kappen der Ananas zu einer zweiten Verarbeitungsstation zur Ausstanzung des Hohlzylinders aus der Ananas verbracht wird.

Auch sind an einen hohen Durchsatz angepasste Ananas-Schäl-und-Stanzvorrichtungen beispielsweise aus der GB 1 569 019 A und US 3 780 641 A bekannt, wobei letztere den nächstreichenden Stand der Technik bildet.

In beiden zuvor genannten Schriften wird die zu verarbeitende Ananas in einer Klemmvorrichtung bzw. Durchgangsöffnung, die sich in einer Revolverscheibe befindet, gehalten. Die Rotation der Revolverscheibe um eine zentrale, horizontal verlaufende Drehachse erfolgt getaktet, sodass an verschiedenen Bearbeitungsstationen die Entfernung der Kappen und die Ausstanzung des Strunks der Ananas erfolgen kann, bevor beim Ausschieben der Ananas aus der Drehebene der Revolverscheibe die äußere Schale der Ananas entfernt wird und ein hohlzylindrisches Stück der Ananas ohne Schale entsteht.

Des Weiteren ist gemäß der Lehre der zuvor gennannten Schriften die Dicke der abgetrennten Kappen der Ananas vorbestimmt, wohingegen die Länge des ausgestanzten Hohlzylinders von der Länge der jeweiligen Ananas abhängt. Zu diesem Zweck drückt die zu schneidende Ananas gemäß der GB 1 569 019 A zwei mit jeweils einem Messer verbundene Schienen, die in einer Ebene senkrecht zur Längsachse der Ananas verlaufen, derart auseinander, dass die Messer entsprechend der Länge der Ananas beabstandet sind. Gemäß der US 3 780 641 A ist zumindest eines der beiden Messer zur Abtrennung der Kappen beweglich gelagert und kann entsprechend der von Sensorelementen bestimmten Länge der Ananas von dem zweiten Messer beabstandet werden.

Beim Ausstanzen eines Hohlzylinders aus der Schale der Ananas verbleibt aufgrund der eher ovalen Form der Ananas ein Rest Fruchtfleisch zwischen der Schale der Ananas und dem äußeren Rand des ausgeschnittenen Hohlzylinders. Um diesen Rest an Fruchtfleisch weiter verwerten zu können, zum Beispiel zur Herstellung von Saft, kann die Ananas vor dem Ausstanzen des Hohlzylinders geschält werden, wie beispielsweise in der US 3,638,696 gezeigt.

In gleicher Weise kann durch das Abtrennen der Kappen durch zur Längsachse der Ananas verlaufende gerade Schnitte ein nicht verwertbarer Rest an Fruchtfleisch in den Kappen verbleiben. In der US 4,373,432 ist eine Möglichkeit beschreiben, diesen Verschnitt durch rotierende, halbrunde Messer, die die axialen Enden der Ananas schälen, zu reduzieren, wodurch das entstehende Ananasstück eine nicht-zylindrische Außenform erhält.

### III. Darstellung der Erfindung

### a) Technische Aufgabe

Es ist daher die Aufgabe gemäß der Erfindung, einen kostengünstigen, zuverlässig und schnell funktionierenden und arbeitsrechtlich sicheren Ananasschneider herzustellen, mit dessen Hilfe der nicht verwertbare Verschnitt minimiert werden kann.

### b) Lösung der Aufgabe

Diese Aufgabe wird durch die Merkmale des Anspruches 1 gelöst. Vorteilhafte Ausführungsformen ergeben sich aus den Unteransprüchen.

Diese Aufgabe wird dadurch gelöst, dass der erfindungsgemäße Ananasschneider eine um seine Axialrichtung drehbare Revolverscheibe aufweist, über deren Umfang gleichmäßig verteilt auf dem jeweils gleichen Radius axiale Durchgangsöffnungen durch die Revolverscheibe vorhanden sind, die etwas größer sind als der Durchmesser einer Ananas, und wobei die Dicke der Revolverscheibe, also die axiale Länge der Durchgangsöffnungen, etwas kleiner ist als die Länge einer Ananas.

In diesem Zusammenhang sollte klargestellt werden, dass unter einer Revolverscheibe nicht zwingend eine Scheibe im Sinne einer bis auf die Durchgangsöffnung durchgehenden Platte zu verstehen ist, sondern jedes Gebilde, in dem die entsprechenden Durchgangsöffnungen, beispielsweise in Form einzelner Rohrstücke, aufgenommen sein können und sich das gesamte Gebilde um seine Achse drehen kann. beispielsweise also auch eine Gitterkonstruktion mit darin aufgenommenen Rohrstücken.

An einer bestimmten Umfangsposition des Ananasschneiders, der sogenannten Füllposition, werden - manuell oder mittels einer später zu beschreibenden Füllvorrichtung - jeweils eine, vorzugsweise bereits entkrautete, Ananas mit ihrer Längsrichtung übereinstimmend zur Axialrichtung der Revolverscheibe in eine solche Durchgangsöffnung eingeschoben, wobei die Ananas mit ihren Enden beidseits aus der Durchgangsöffnung und damit der Revolverscheibe vorsteht.

An einer anderen Umfangsposition, der sogenannten Stanzposition, die von der Füllposition um das ganzzahlige Mehrfache eines Zwischenwinkels zwischen zwei Durchgangsöffnungen entfernt ist, werden mittels der inneren Stanzhülse und der äußeren Stanzhülse der gewünschte Hohlzylinder aus der in der Durchgangsöffnung befindlichen Ananas in axialer Richtung ausgestanzt.

Zu diesem Zweck sind die innere und die äußere Stanzhülse relativ zu der in der Durchgangsöffnung aufgenommenen Ananas axial beweglich, jedoch unabhängig voneinander. Zusätzlich ist ein Ausschieber vorhanden, der ebenfalls in axialer Richtung die Ananas aus der Durchgangsöffnung axial hinausschieben kann.

In einer bevorzugten Ausführungsform ist der vorzugsweise ringförmige oder aus mehreren Ringsegmenten bestehende Ausschieber koaxial zu der inneren Stanzhülse angeordnet und beide sind in axialer Richtung unabhängig voneinander, jedoch in axialer Richtung zur Revolverscheibe beweglich angeordnet, und zwar auf vorzugsweise der gleichen Seite der Revolverscheibe, und beide sind axial so weit beweglich, dass sie die Durchgangsöffnung vollständig durchdringen können.

Es versteht sich von selbst, dass der Ausschieber zu diesem Zweck einen Außenumfang besitzen muss, der kleiner ist als die Durchgangsöffnung.

Die äußere, größere Stanzhülse ist vorzugsweise feststehend zur Revolverscheibe an der Stanzposition angeordnet, axial neben der Revolverscheibe, und zwar auf der vom Ausschieber gegenüberliegenden Seite, sodass die zum Beispiel von ihrem Strunk mittels der inneren Stanzhülse bereits befreite Ananas mittels des Ausschiebers auf die äußere Stanzhülse aufgeschoben werden kann und dadurch der Ananas-Hohlzylinder von der äußeren Schale befreit wird.

In dem Segment, welches bei Drehung der Revolverscheibe von der Füllposition zur Stanzposition von der gefüllten Durchgangsöffnung überstrichen wird, befindet sich in axialer Richtung axial beidseits der Revolverscheibe ein Abtrennmesser, sodass beim Hindurchdrehen der in der Durchgangsöffnung aufgenommenen Ananas, deren Enden ja beidseits aus der Revolverscheibe vorstehen, von jedem der beiden Abtrennmesser eines der Enden der Ananas in Form einer endseitigen Kappe der Ananas abgetrennt wird.

Zu diesem Zweck liegen die Abtrennmesser quer zur axialen Richtung der Revolverscheibe, vorzugsweise in einer Radialebene zur Revolverscheibe und natürlich im Radialbereich der Durchgangsöffnungen.

Um den gewünschten Hohlzylinder herzustellen, wird also jeweils an der Füllposition eine Ananas in eine der Durchgangsöffnungen eingeschoben, dann die Revolverscheibe weiter gedreht, bis sich die nächste Durchgangsöffnung an der Füllposition befindet, und in diese wiederum eine Ananas eingesetzt.

Immer wenn die Revolverscheibe still steht, also an der Füllposition gerade befüllt wird, wird an der Stanzposition, an der sich dann gerade eine gefüllte Durchgangsöffnung befindet, durch entsprechende axiale Bewegungen von vorzugsweise zuerst der inneren Stanzhülse und nach deren Rückzug oder gleichzeitig damit durch Vorwärtsschieben des Ausschiebers die Ananas axial aus der Revolverscheibe entfernt und gleichzeitig von ihrer Schale am Umfang befreit.

Vorzugsweise sind zu diesem Zweck die innere Stanzhülse und die äußere Stanzhülse mit einem über ihre axiale Erstreckung gleichbleibenden Innendurchmesser ausgestattet. Die innere Stanzhülse besitzt zusätzlich vorzugsweise auch einen gleichbleibenden Außendurchmesser, während die äußere Stanzhülse einen in Aufschieberichtung, in der die Ananas darauf aufgeschoben wird, vorzugsweise einen zunehmenden Durchmesser besitzt.

Denn vorzugsweise besitzt die äußere Stanzhülse radial nach außen vorstehende Zusatzklingen, die die ansonsten hülsenförmige Schale in Axialrichtung dann beim Aufschieben durchtrennen und in Segmenten von der äußeren, größeren Stanzhülse herabfallen lassen.

Denn die axiale Richtung der äußeren Stanzhülse und ebenso der inneren Stanzhülse und damit auch die axiale Richtung der Revolverscheibe ist vorzugsweise nicht senkrecht, sondern schräg oder horizontal angeordnet.

Da innere Stanzhülse, Ausschieber und auch äußere Stanzhülse an der Stanzposition koaxial zur Mitte der Durchgangsöffnung der Revolverscheibe in dieser Stanzposition angeordnet sind, wird das Ausstanzen des Hohlzylinders aus der Ananas nur dann in deren Mitte geschehen, wenn die Ananas mittig in der Durchgangsöffnung positioniert, also zentriert, ist.

Dies ist ohne weitere Zusatzmaßnahmen nur dann der Fall, wenn der Durchmesser der Ananas möglichst genau dem Innendurchmesser der Durchgangsöffnung entspricht. Hierfür müsste jedoch genau zum Durchmesser der Durchgangsöffnung eine passende Ananas ausgewählt werden, was kaum möglich ist.

Stattdessen muss mit dem Ananasschneider eine gewisse Durchmesservarianz von Früchten bearbeitbar sein, und der Innendurchmesser der Durchgangsöffnungen entsprechend dem größten zu verarbeitenden Ananas-Durchmesser gewählt werden.

Damit alle dem gegenüber einen geringeren Durchmesser aufweisenden Früchte nicht exzentrisch in der Durchgangsöffnung liegen, sondern zentrisch in dieser angeordnet sind, weisen die Durchgangsöffnungen Zentrierelemente auf, die auch Früchte mit kleinerem Durchmesser in der Mitte, also auf der Mittelachse, der Durchgangsöffnung halten.

Dies können alle Arten von einer Vorspannung radial nach innen aufweisenden, in den Umfangswänden der Durchgangsöffnung angeordneten, Zentrierelemente sein.

Um eine einfache und leicht zu reinigende Bauform der Zentrierelemente zu erreichen, bestehen diese jedoch aus Zentrierplatten aus einem elastischen Material, die mit ihrer Plattenebene radial vom äußeren Umfang etwas ins Innere der Durchgangsöffnung hineinragen, und vorzugsweise alle um den gleichen Winkel schräg gestellt zur axialen Richtung sind. An ihrem äußeren Ende sind diese Zentrierplatten vorzugsweise nicht fest an dem Umfang der Durchgangsöffnung befestigt, sondern enden in einem Aufnahme-Zylinder.

Dieser Aufnahmezylinder verläuft mit seiner axialen Richtung parallel zur axialen Richtung der Revolverscheibe in einer runden Ausnehmung außerhalb der Durchgangsöffnung, die jedoch zur Durchgangsöffnung hin offen ist, also etwa Ω-förmig gestaltet ist, und in die der Aufnahmezylinder hineinpasst, sodass von dort aus die Zentrierplatte ins Innere der Durchgangsöffnung hineinragt.

Wird nun eine - vorzugsweise bereits entkrautete - Ananas axial in die Durchgangsöffnung hinein geschoben, werden die Zentrierplatten alle um den gleichen Winkelbetrag in Umfangsrichtung der Durchgangsöffnung ausgelenkt, indem die Aufnahmezylinder sich in ihren Ausnehmungen leicht verdrehen, in der die Aufnahmezylinder vorzugsweise in Umfangsrichtung in ihre Ausgangslage, die Mittellage, vorgespannt sind, und damit sitzt die Ananas zentrisch in der Durchgangsöffnung.

Um den Verschnitt zu minimieren, ist neben den beiden Abtrennmessern, die sich ja über den gesamten Radialbereich der Durchgangsöffnungen erstrecken, zusätzlich ein Einschneidmesser in axialer Richtung zwischen der Revolverscheibe und einem der Abtrennmesser angeordnet, welches die Ananas in einer radialen Richtung weitestgehend, aber nicht vollständig, durchtrennt. Das Einschneidmesser ist vorzugsweise jedoch an einer etwas anderen Umfangsposition als die beiden Abtrennmesser positioniert, aber immer noch in dem Schneidbereich, also in dem Winkelbereich zwischen Füllposition und Stanzposition, betrachtet in Drehrichtung der Revolverscheibe im Einsatz.

Dieses Einschneidmesser erstreckt sich von außen so weit nach innen in Richtung Mitte, also Drehachse, der Revolverscheibe, dass es über den radialen Bereich der inneren Stanzhülse hinwegreicht, und es auch geringfügig, nur wenige Millimeter, über den radialen Bereich der äußeren Stanzhülse hinweg nach radial innen reicht.

Eine an dem Einschneidmesser vorbeilaufende Ananas wird also - neben dem Abtrennen der Kappen durch die Abtrennmesser - in einem axialen Abstand dazu nochmals fast durchtrennt und dadurch aufgeteilt in den Hauptteil des entstehenden Hohlzylinders und eine noch daran hängende einzelne Zusatzscheibe, deren Dicke dem Abstand zwischen Einschneidmesser und dem benachbarten Abtrennmesser entspricht.

Sobald dann etwas später an der Stanzposition das Ausstanzen mittels der äußeren Stanzhülse geschieht, wird der zu erzeugende Hohlzylinder mit seiner definierten Länge - dem axialen Abstand zwischen dem Einschneidmesser und dem weiter davon entfernten Abtrennmesser - von der Zusatzscheibe abgetrennt, da ja der Einschnitt sich über den Durchmesser der äußeren Stanzhülse hinweg erstreckt hat und die beiden Teile - also Hohlzylinder und Zusatzscheibe - nur vorher über den Schalenbereich miteinander verbunden waren.

Durch diese Maßnahme wird Folgendes erreicht:
Die Ananas werden - unabhängig von ihrer Größe - soweit in die Durchgangsöffnung eingeschoben, dass auf einer Seite, beispielsweise der Einschubseite, das damit hintere Ende der Ananas immer an derselben Position steht.

Abhängig von der Länge der Ananas steht diese dann also auf der anderen, Seite der Abfuhrseite, unterschiedlich weit über die Revolverscheibe vor. Dann befindet sich das Einschneidmesser auf dieser Abfuhrseite der Revolverscheibe.

Umgekehrt ist es möglich, die Ananas immer bis zu einem bestimmten Punkt, einem feststehenden Anschlag, auf der Abfuhrseite am vorderen Ende der Ananas einzuschieben. Dann würde sich das Einschneidemesser am hinteren Ende der Ananas, also auf der Zufuhrseite befinden.

Das Einschneidemesser ist also immer gegenüberliegend der Axialposition bezüglich der Revolverscheibe angeordnet, an der die Ananas unabhängig von ihrer Größe immer beim Einschieben an einem ihrer Enden in axialer Richtung gleich positioniert sind.

Die dadurch erzeugte Zusatzscheibe - zwischen Einschneidemesser und Abtrennmesser - besitzt zwar immer die gleiche axiale Dicke, unabhängig von der Länge der Ananas. Die von dem Abtrennmesser benachbart zum Einschneidmesser abgetrennte Kappe besitzt jedoch je nach Länge der Ananas eine unterschiedliche Dicke.

Ist diese Kappe axial relativ kurz, weil die entsprechende Ananas relativ kurz und klein war, und/oder die Kappe besitzt eine in axialer Richtung weit hineinreichende Abrundung, so besteht eine hohe Wahrscheinlichkeit, dass an der abgetrennten Zusatzscheibe noch Schale vorhanden ist, und damit die Zusatzscheibe nicht als Ananasscheibe verwertbar ist, sondern höchstens für andere Zwecke, Ananasstücke (wenn die Schale sich nicht über den gesamten Umfang der Zusatzscheibe erstreckt) oder zur Saftgewinnung.

War die Ananas jedoch so lang, dass die abgetrennte Kappe relativ dick ausfiel, so erstreckt sich die Biegung am Übergang von Kappe zum Hauptteil der Ananas in aller Regel nicht mehr in die Zusatzscheibe hinein, sodass an dieser Zusatzscheibe keine Schale mehr vorhanden ist und diese Zusatzscheibe als Ananasscheibe verwendbar ist und dadurch den Verschnitt minimiert, da sie zusätzlich zu dem primär herzustellen Hohlzylinder hochpreisig verwertet werden kann.

In der Regel wird die Ananas nicht manuell an der Füllposition in die Revolverscheibe eingeschoben, zum Beispiel gegen einen dort auf der gegenüber liegenden Seite vorhandenen feststehenden Anschlag, sondern mittels eines Einschiebers axial eingeschoben.

Damit kann festgelegt werden, ob das hintere oder das vordere Ende der Ananas immer an der gleichen axialen Position steht, je nachdem, ob entweder der Einschieber an immer der gleichen vordersten axialen Position stehen bleibt, oder ob immer der gegenüberliegende Anschlag an der gleichen axialen Position steht.

Im ersteren Fall ist der gegenüberliegende Anschlag - der vorzugsweise auf der Kontaktseite zur Ananas topf- förmig mit zum Beispiel konischen Wänden ausgebildet ist, um die Ananas in der Durchgangsöffnung radial zu zentrieren - gefedert ausgebildet, vorzugsweise mittels eines Pneumatikzylinders, oder auf andere Art und Weise kraftbeaufschlagt in axialer Richtung, um ein Abheben der Ananas in axialer Richtung von dem Einschieber zu verhindern. Abhängig von den zu verarbeitenden Früchten und deren Größe können die Abtrennmesser und/oder das Einschneidmesser und/oder die axialen Anschläge und/oder der Einschieber in axialer Richtung einstellbar sein.

Es kann auch eine automatische Einstellvorrichtung vorhanden sein, sodass die Position der Abtrennmesser und/oder des Einschneidemessers in Abhängigkeit von der ausgefahrenen Endposition des Einschiebers und/oder der Position des Gegenhalters automatisch eingestellt werden, beispielsweise mit Hilfe einer Schleppvorrichtung, an der die Abtrennmesser und das Einschneidmesser befestigt sind und die in axialer Richtung mit den genannten Positionen wirkverbunden sind.

In einer bevorzugten Ausführungsform ist das Einschneidmesser immer im gleichen Abstand zu dem weiter entfernten der beiden Abtrennmesser eingestellt entsprechend der Länge des gewünschten immer gleich langen Hohlzylinders.

Vorzugsweise kann auf der von der inneren Stanzhülse gegenüberliegenden Seite der Revolverscheibe an der Stanzposition ein Anschlag vorhanden sein, der in einer Radialebene in die Stanzposition eingeschwenkt oder aus dieser weggeschwenkt werden kann. Wenn die innere Stanzhülse den Strunk aus der Ananas ausstanzt, ist dieser Anschlag in die Stanzposition eingeschwenkt und stützt die Ananas in axialer Richtung ab, und wird wieder weggeschwenkt, sobald der Strunk ausgestanzt ist und sich die innere Stanzhülse wieder axial zurückzieht.

Häufig ist ein solcher Anschlag jedoch nicht notwendig, sondern die größere, äußere Stanzhülse wirkt als ein solcher Anschlag, denn zum Aufschieben der Ananas auf diese äußere Stanzhülse ist ein wesentlich höherer Kraftaufwand erforderlich, als die durch Einstechen der inneren Stanzhülse und Ausstechen des Strunks auf die Ananas aufgebrachte Kraft.

Nach dem vorwärts Fahren der inneren Stanzhülse - egal ob vor, während oder nach deren Zurückziehen - wird die Ananas von dem Ausschieber axial vorwärts bewegt und aus der Durchgangsöffnung hinaus auf die gegenüberliegende äußere Stanzhülse geschoben.

Die Früchte werden vorzugsweise nicht von Hand vor die Durchgangsöffnung an der Füllposition gelegt, sondern mittels eines Fruchtförderers dort hin transportiert, der in der Lage ist, jeweils eine Ananas mit ihrer axialen Richtung fluchtend zur Axialrichtung der Revolverscheibe vor der Füllposition zu positionieren.

Vorzugsweise verläuft der Fruchtförderer in seiner Förderrichtung radial und axial versetzt zur Revolverscheibe und besitzt formschlüssig ausgebildete Aufnahmepositionen für jeweils eine Ananas, und wird getaktet um den Abstand dieser Aufnahmepositionen vorwärtsbewegt, sodass immer eine Ananas fluchtend vor der Durchgangsöffnung in der Füllposition positioniert ist und von dem Einschieber in die Durchgangsöffnung hingeschoben werden kann.

Zusätzlich umfasst ein solcher Ananasschneider eine Steuerung, in der Regel eine elektronisch ausgebildete Steuerung, die in der Lage ist, die zuvor beschriebenen Bewegungen in dem zuvor beschriebenen zeitlichen Zusammenhang durchzuführen.

### c) Ausführungsbeispiele

Ausführungsformen gemäß der Erfindung sind im Folgenden beispielhaft näher beschrieben. Es zeigen:

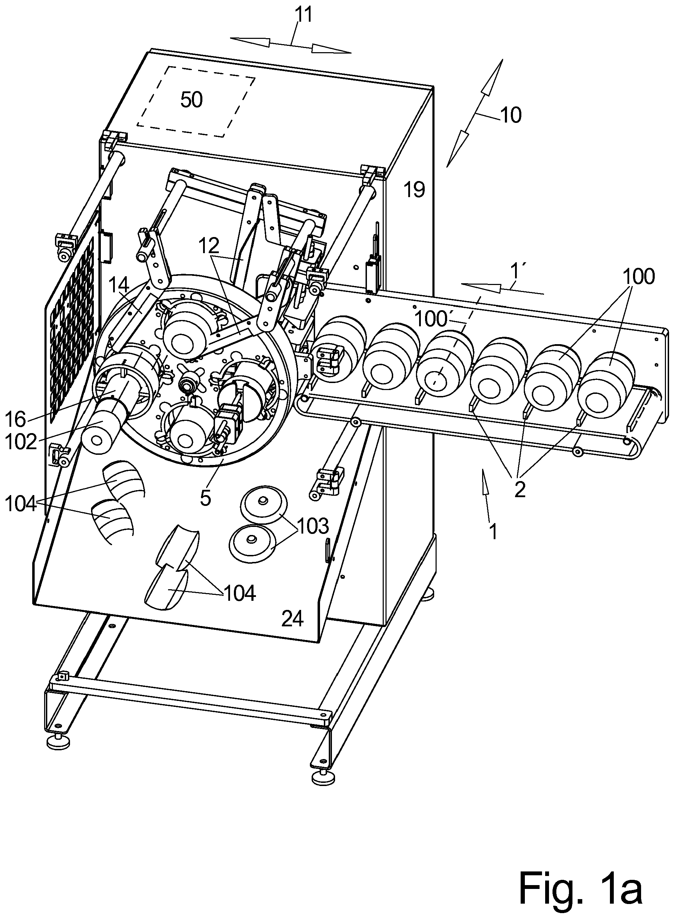

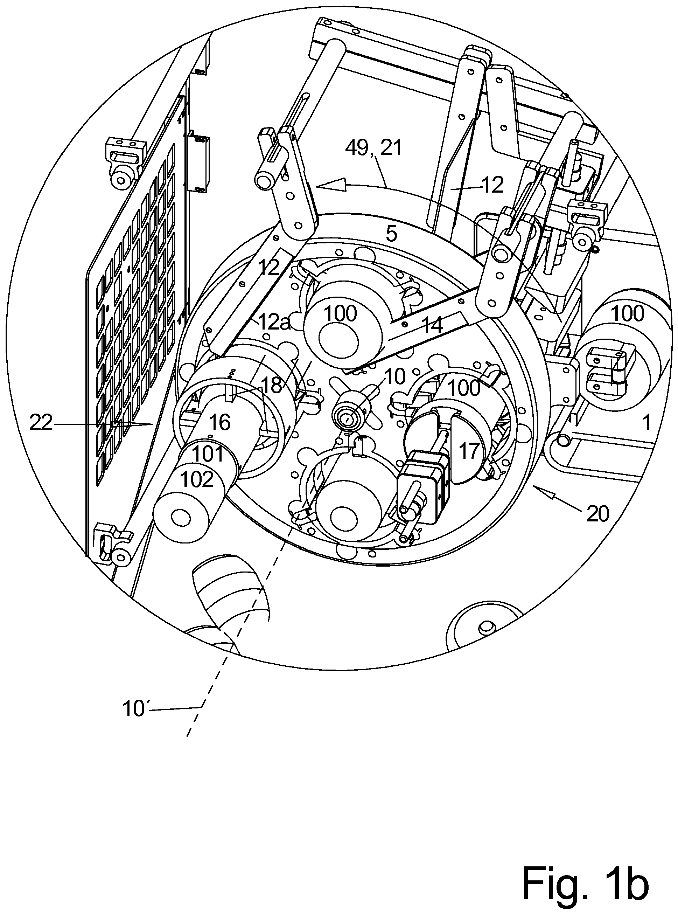

- Figur **1**a:: den Ananasschneider in perspektivischer Ansicht von schräg oben,
- Figur **1**b:: hieraus eine Ausschnittvergrößerung betreffend die Revolverscheibe,
- Figur **2**a:: den wesentlichen Teil des Ananasschneiders der Figur **1**a in der Seitenansicht,

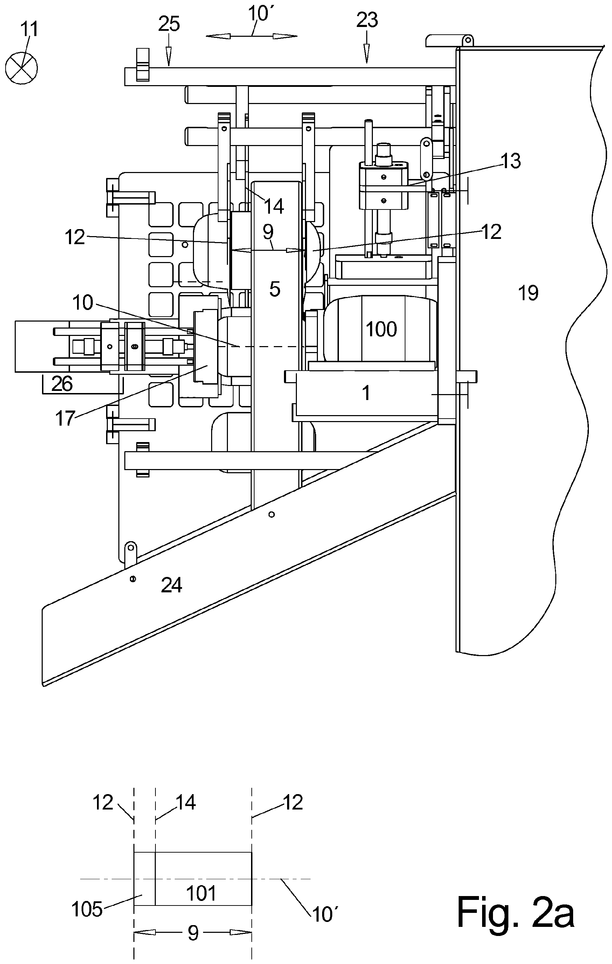

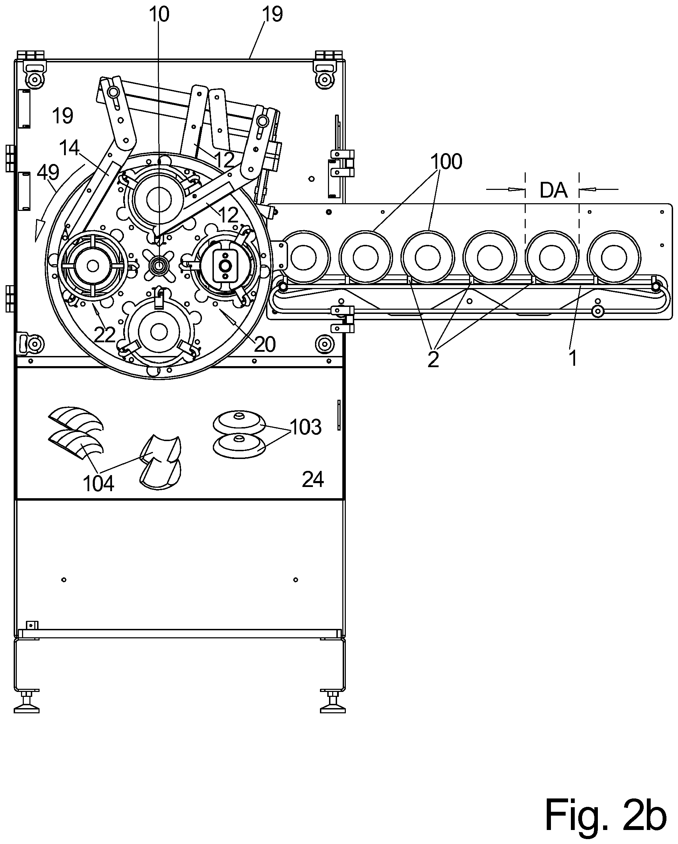

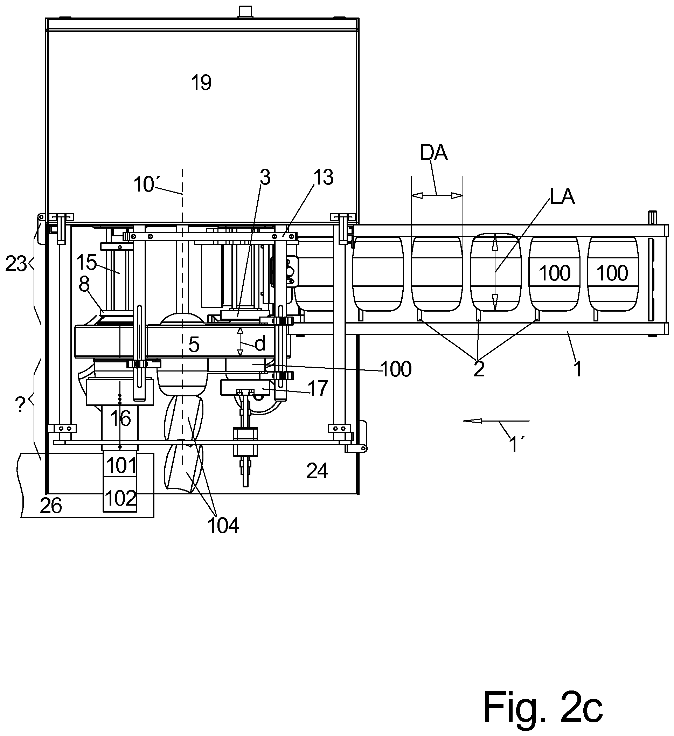

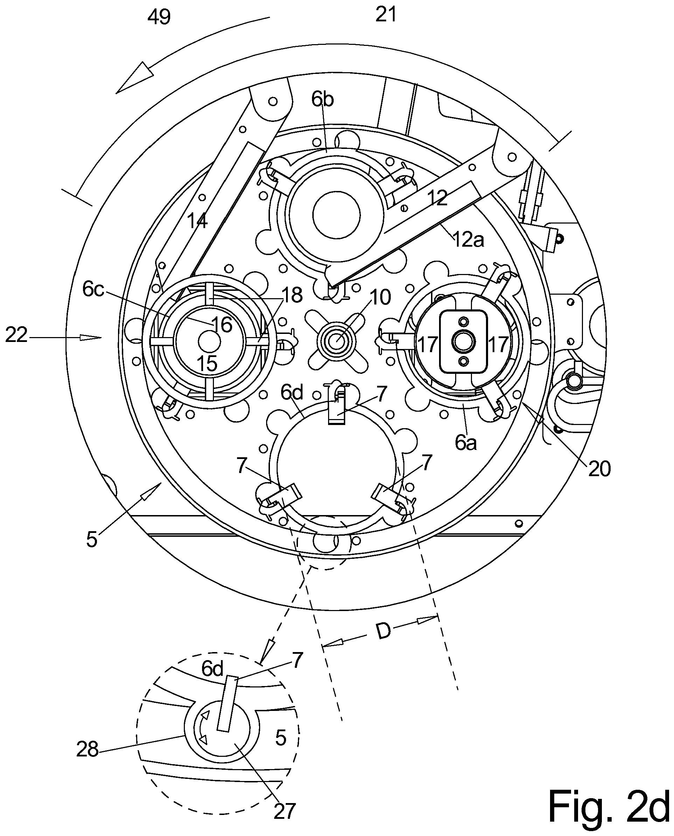

- Figur **2**b:: den Ananasschneider der Figur **1**a in der Frontansicht,
- Figur **2**c:: den Ananasschneider in der Aufsicht und
- Figur **2**d:: einen vergrößerten Ausschnitt aus Figur **2**b.

Der Aufbau und die Funktion des Ananasschneiders werden im Folgenden primär anhand der **Figuren 1b****,** **2c** **und** **2d** erläutert, wobei die übrigen Ansichten die Zuordnung der einzelnen Bauteile erleichtern.

Wie am besten in **Figur 2d** zu erkennen, ist Kernstück des Ananasschneiders die Revolverscheibe **5**, die um ihre zentrale Drehachse **10**, die in Blickrichtung der Figur **2d** verläuft, drehbar ist und exzentrisch zu dieser Drehachse **10** auf dem jeweils gleichen Radius in Umfangsrichtung gleichmäßig beabstandet, in diesem Fall um je **90** Grad beabstandet, vier gleich ausgebildete axiale Durchgangsöffnungen **6**a - d aufweist, in die im Betrieb jeweils eine Ananas **100** eingeschoben und daraus der gewünschte Hohlzylinder **101**, **102** aus der Ananas **100** ausgeschnitten wird.

Die Revolverscheibe **5** wird in Drehrichtung **49** taktweise weiter bewegt, also jeweils um den Zwischenwinkel zwischen zwei benachbarten Durchgangsöffnungen, in diesem Fall um jeweils **90** Grad.

Die Figur **2**d zeigt die Revolverscheibe **5** in dem stillstehenden Zustand, in dem sich die Durchgangsöffnung **6**a in Figur **2**d rechts außen in der sogenannten Füllposition **20** befindet, in der diese Durchgangsöffnung **6**a mit einer neuen Ananas **100** befüllt wird, und die Durchgangsöffnung **6**c gegenüberliegend in der sogenannten Stanzposition **22**, in der der Hohlzylinder **101** aus der Ananas **100** axial ausgestanzt wird.

In dem Umfangsbereich etwa zwischen Füllposition **20** und Stanzposition **22**, dem Schneidbereich **21**, sind in der axialen Blickrichtung der Figur **2**d Messer angeordnet, die unter anderem die axialen Endkappen der Ananas abschneiden, wie später erläutert wird.

Die Durchgangsöffnung **6**d, die sich hier an der untersten Position befindet, ist somit funktionslos, sodass die Revolverscheibe **5** auch nur drei gleichmäßig über den Umfang verteilte Durchgangsöffnungen aufweisen könnte.

Im Folgenden wird die Funktion anhand des Ablaufes beim Herstellen des Hohlzylinders **101** beschrieben:
Zunächst werden die bezüglich der Revolverscheibe **5** einander axial gegenüberliegenden Seiten als Zufuhrseite **23** und Abfuhrseite **25** bezeichnet.

Wie am besten **Figur 2c** zeigt, werden auf der Zufuhrseite **23** - in Blickrichtung der Figuren **2**d und **2**b also hinter der Revolverscheibe **5** - die zu bearbeitenden Ananas **100**, die bereits von ihrem Kraut, also den Blättern, anderweitig befreit wurden, radial in den Umfangsbereich der Revolverscheibe **5** hineintransportiert.

Dies erfolgt mit Hilfe eines Fruchtförderers **1**, der am besten in den Figuren **1a** **und** **2b** zu erkennen ist, der aus einem radial zur Revolverscheibe **5** hin ausgerichteten Förderband besteht, welches zur Revolverscheibe **5** hin leicht nach unten abfällt und auf dessen Obertrum die Ananas **100** aufgelegt sind.

Da auf dem Fruchtförderer **1** quer zu dessen Bewegungsrichtung verlaufende Anschlagleisten vorhanden sind, rollen die Ananas **100**, von denen je eine zwischen zwei solcher Anschlagleisten aufgelegt ist, aufgrund der Neigung immer zu der benachbarten Anschlagleiste hin, wodurch formschlüssig definierte Ablagepositionen **2** auf dem Fruchtförderer **1** geschaffen sind.

Der Fruchtförderer **1** bewegt sich getaktet vorwärts, sodass immer die auf der vordersten Ablageposition **2** in Richtung Revolverscheibe **5** liegende Ananas **100** mit ihrer axialen Richtung **100'** ausgerichtet zur axialen Richtung **10'** der Revolverscheibe **5** vor deren Durchgangsöffnung zum Beispiel **6**a in der Füllposition **20** zu liegen kommt.

Dann schiebt der Einschieber **3** - wie in **Figur 2c** erkennbar - diese vor der Füllposition **20** liegende Ananas **100** axial in die dortige Durchgangsöffnung, zum Beispiel **6**a, von der Zufuhrseite **23** aus hinein, bis die Ananas **100** mit ihrer gegenüberliegenden Stirnseite auf der Abfuhrseite **25** an einem Gegenhalter **17** anliegt.

Da die Ananas **100** eine axiale Länge LA besitzt, die größer ist als die Dicke d der Revolverscheibe **5**, steht die Ananas aus der Revolverscheibe **5** in axialer Richtung vor, wobei der Gegenhalter **17** so positioniert ist, dass die Ananas beidseits vorsteht, auf der Abfuhrseite **25** jedoch um ein größeres Maß als auf der Zufuhrseite **23**, was durch entsprechenden Einstellung der axialen Position des vorzugsweise in axialer Richtung gefederten Gegenhalters **17** erreicht wird.

Damit die Ananas **100** in die Durchgangsöffnungen hineinpassen, besitzen diese einen größeren Durchmesser D, als der Durchmesser DA einer zu verarbeitenden Ananas **100** in der Regel ist.

Da für das zentrische Ausstanzen des Hohlzylinders **101** an der Stanzposition **22** auch die zentrische Aufnahme der Ananas **100** in der Durchgangsöffnung erforderlich ist, besitzen die Durchgangsöffnungen **6**a - d jeweils Zentrierelemente **7**, wie am besten in **Figur 2d** zu erkennen:
Dies können entweder radial in den Innenraum der Durchgangsöffnung vorstehende, in radialer Richtung **10'** in die vorgeschobene Richtung vorgespannte Zentrierelemente **7** sein, wie in der Gesamtdarstellung der Figur **2**d dargestellt, oder auch spezifisch ausgebildete Zentrierelemente **7** wie in dem vergrößerten Detailausschnitt der Figur **2**d unten dargestellt:
Dabei stehen in axialer Richtung **10'** verlaufende Zentrierplatten **7** aus einem Aufnahmezylinder **27** vor, der mit seiner Axialrichtung in eine ebenfalls axial verlaufende Ausnehmung **28** passt und darin in seiner Drehlage einstellbar um die axiale Richtung **10'** und in dieser Drehlage fixiert war angeordnet sind. Da die Ausnehmung **28** zur Durchgangsöffnung z.B.**6**d, hin offen ist, ragt die Zentrierplatte **7** von der Ausnehmung **28** in die Durchgangsöffnung, zum Beispiel **6**d, hinein.

Der Aufnahmezylinder **27** ist so in der Ausnehmung **28** befestigt, dass er hinsichtlich seiner Drehlage in eine Mittellage vorgespannt ist. Die in die Durchgangsöffnung zum Beispiel **6**a eingeschobene Ananas **100** ist in der Regel größer als der freie Durchlass zwischen den radial inneren Enden der Zentrierelemente, zum Beispiel der Zentrierplatten **7**, sodass die Zentrierplatten **7** durch die Ananas **100** in Umfangsrichtung verschwenkt werden und somit die Ananas zentrisch in der Durchgangsöffnung halten.

Während an der Füllposition **20** die Durchgangsöffnung zum Beispiel **6**a mit einer neuen Ananas befüllt wird, wird gleichzeitig an der in diesem Fall gegenüberliegenden Stanzposition **22** aus der dortigen Ananas **100** der gewünschte Hohlzylinder **101** axial ausgestanzt.

Beschrieben anhand der momentan noch in der Füllposition **20** befindlichen Ananas **100** wird also nach dem Befüllen dieser Durchgangsöffnung **6**a die Revolverscheibe **5** um **90** Grad gedreht, sodass sich die in Drehrichtung **49** nächste Durchgangsöffnung **6**d an der Füllposition **20** befindet und mit einer weiteren Ananas **100** gefüllt werden kann.

Danach wird die Revolverscheibe **5** wiederum um **90** Grad weiter gedreht, sodass sich nunmehr die in Figur **2**d noch an der Füllposition **20** dargestellte Durchgangsöffnung **6**a mit der darin befindlichen Ananas **100** nunmehr an der Stanzposition **22** befindet.

Auf dem Weg von der Füllposition **20** zur Stanzposition **22**, dem sogenannten Schneidbereich **21** wird jedoch durch die in den Radialbereich der Durchgangsöffnungen hinein vorstehenden, axial vor und hinter der Revolverscheibe **5** angeordneten Messer auf die aus der Durchgangsöffnung vorstehende Ananas **100** eingewirkt:
Wie am besten anhand der **Figuren 1a** **und** **2a** ersichtlich, sind dies zum einen die beiden Abtrennmesser **12**, von denen eines im Zufuhrbereich **23** und eines im Abfuhrbereich **25** mit einem axialen Abstand **9** zueinander angeordnet sind, der geringer ist als die Länge LA einer Ananas **100**, und die so positioniert sind, dass das auf der Abfuhrseite **25** positionierte Abtrennmesser **12** axial näher an der Revolverscheibe **5** angeordnet ist als die Anschlagfläche des Gegenhalters **17** in der Füllposition **20.**

Diese beiden Abtrennmesser **12** überstreichen in radialer Richtung den gesamten Radialbereich der Durchgangsöffnungen und trennen somit von der Ananas **100** jeweils eine der beiden axialen Endkappen **103** ab, die daraufhin auf die unterhalb der Revolverscheibe **5** angeordnete, schräg nach unten gerichtete Rutsche **24** fallen, die zu einem nicht dargestellten Abfallbehälter führt.

Der Abstand **9** der beiden Abtrennmesser **12** ist andererseits jedoch länger als die vorgegebene axiale Länge des herzustellenden hohlzylindrischen Stücks **101** der Ananas, wie in **Figur 2a** vergrößert dargestellt.

Deshalb ist auf der Abfuhrseite **25** an einer Axialposition zwischen dem dortigen Abtrennmesser **12** und der Revolverscheibe **5** ein Einschneidmesser **14** angeordnet in einem axialen Abstand zu dem auf der gegenüberliegenden Zufuhrseite angeordneten Abtrennmesser **12**, welcher der axialen Länge des hohlzylindrischen Stücks **101** entspricht.

Dieses Einschneidmesser **14** erstreckt sich radial nach innen nicht über den gesamten Radialbereich der Durchgangsöffnungen **6**a - d, sondern nur so weit radial nach innen, wie der radial innerste Punkt der nachfolgend erläuterten äußeren Stanzhülse **16** reicht oder sehr geringfügig, maximal **5** mm, noch weiter radial nach innen.

Dadurch wird die in ihrem Umfangsbereich noch mit Schale versehene Ananas von dem Einschneidmesser **14** nicht vollständig durchtrennt, sondern hängt an einer Seite noch über die Schale zusammen.

Die so geschnittene Ananas **100** befindet sich nunmehr in der Stanzposition **22**:
Dort befindet sich auf der Abfuhrseite **25** fluchtend zur in der Stanzposition **22** befindlichen Durchgangsöffnung eine äußere Stanzhülse **16**, deren Axialrichtung mit der Axialrichtung **10'** der Durchgangsöffnungen und damit der Revolverscheibe **5** fluchtet. Die zur Revolverscheibe **5** weisende Vorderkante der äußeren Stanzhülse **16** ist von der Revolverscheibe **5** in axialer Richtung etwas weiter entfernt als der Gegenhalter **17** an der Füllposition **20**, sodass eine aus der Revolverscheibe **5** vorstehende Ananas **100** problemlos in die Stanzposition **22** eingeschwenkt werden kann.

Auf der Zufuhrseite **23** ist fluchtend zur Stanzposition **22** zum einen eine in axialer Richtung verlaufende und in axialer Richtung **10'** bewegliche innere Stanzhülse **15** angeordnet, die zum Herausstanzen des zentralen Strunkes der Ananas **100** dient, sowie ein die innere Stanzhülse **15** umgebender, vorzugsweise ringförmiger oder kreisringsegmentförmiger Ausschieber **8**, dessen Außenumfang geringer ist als die Durchgangsöffnungen und auch der dortige freie Durchgang durch deren Zentrierelemente **7**, und der ebenfalls in axialer Richtung **10'** bewegbar ist. Die Bewegungswege der inneren Stanzhülse **15** und des Ausschiebers **8** sind so bemessen, dass sich diese durch die Durchgangsöffnung hindurch bewegen können.

An der Stanzposition **22** wird nunmehr zuerst die innere Stanzhülse **15** axial in die Durchgangsöffnung hinein vorgefahren.

Dadurch wird zunächst die in der Durchgangsöffnung befindliche Ananas **100** axial vorwärts geschoben, bis sie an der äußeren Stanzhülse **16**, die ja feststehend und axial nicht beweglich ist, anliegt und zunächst als Längsanschlag dient.

Durch weiteres Vorwärtsschieben der inneren Stanzhülse **15** dringt diese in die Ananas **100** ein und durchdringt diese vollständig, sodass sich der ausgestanzte Strunk im Inneren der inneren Stanzhülse **15** befindet, während die Ananas **100** an der äußeren Stanzhülse **16** anliegt.

Vorzugsweise noch bevor die innere Stanzhülse **15** axial zurückgezogen wird, drückt der Ausschieber **8** die Ananas **100** weiter axial nach vorne aus der Revolverscheibe **5** heraus und über die äußere Stanzhülse **16**, die den Außenumfang des gewünschten Hohlzylinders **101** stanzt.

Wie am besten anhand **Figur 1b** ersichtlich, erstrecken sich von der äußeren Stanzhülse **16** - deren Außendurchmesser sich vorzugsweise in Aufschieberichtung der Ananas **100** vergrößert - am vorderen Ende radial über den Umfang verteilt mehrere, in diesem Fall vier, Zusatzmesser **18** nach außen, mittels derer die äußere Stanzhülse **16** auch in einer außen umgebenden Haltehülse fixiert sein kann.

Die von der äußeren Stanzhülse **16** ausgestanzte äußere Schalenhülse wird durch diese radialen Zusatzmesser **18** in Schalensegmente **104** zertrennt, die auf der Abfuhrseite **25** von der äußeren Stanzhülse **16** herabfallen.

Aus dem Inneren der äußeren Stanzhülse **16**, die vorzugsweise eine axiale Länge von etwas mehr oder etwas weniger der Länge LA einer Ananas **100** besitzt, fällt der Hohlzylinder **101** herab in eine unter das freie Ende der äußeren Stanzhülse **16** angeordnete Rutsche **26**, oder eine andere Abtransportvorrichtung. Die Rutsche **26** oder diese andere Abtransportvorrichtung ist knapp unter der äußeren, also in Durchschubrichtung hinteren, Ende der äußeren Stanzhülse **16** angeordnet und damit oberhalb der anderen Rutsche **24** für die Abfälle.

Durch das Ausstanzen des Außenumfanges des Hohlzylinders **101** wird die Schalen-Verbindung zwischen den von dem Einschneidmesser **14** erzeugten, zuvor noch zusammenhängenden beiden Teilen der Ananas **100** getrennt, sodass aus dem hinteren freien Ende der Stanzhülse **16** nicht nur der Hohlzylinder **101**, sondern auch eine sich daran anschließende, nunmehr separierte, Zusatzscheibe **105** herausfallen.

Je nach Länge und Form der Ananas **100** ist die Chance relativ groß, dass sich an dieser Zusatzscheibe **105** keine oder kaum mehr Schalenanteile mehr befinden, und diese Zusatzscheibe **105** damit zusätzlich zu dem - hinsichtlich Länge und Durchmesser vorgegebenen - Hohlzylinder **101** zusätzlich verkauft werden kann.

Vor allem **Figur 2d** **und** **1b** zeigen, dass die Messer **14, 12** vorzugsweise nicht exakt radial verlaufen, sondern schräg zur radialen Richtung **10'**, um einen ziehenden Schnitt durch die Ananas **100** zu bewirken.

Zusätzlich sind diese Messer an einem entsprechenden, in axialer Richtung verlaufenden, Halter in ihre Axialposition einstellbar und natürlich auch in ihrer Verlaufsrichtung, sodass vor allem beim Einschneidmesser **14** auch die Radialposition des inneren Endes des Einschneidmessers **14** genau eingestellt werden kann, beispielsweise abhängig von der Größe der verwendeten äußeren Stanzhülse.

Statt für eine gesamte Charge Ananas die vor allem Axialpositionen der Messer **12, 14** fix einzustellen, gibt es auch die Möglichkeit, diese für jede einzelne Ananas **100** separat automatisch einzustellen und dadurch eine optimal dicke Zusatzscheibe **105** bei jeder Ananas **100** zu erzielen.

Dies geschieht beispielsweise vorliegend durch eine Schleppvorrichtung **13**:
Wie am besten anhand der **Figur 2c** zu erläutern ist, befindet sich der Gegenhalter **17** für eine bestimmte Charge an Früchten an einer axial fixen Position.

Der Einschieber **3** kann jedoch entsprechend der Länge LA der jeweiligen Ananas **100** nur bis zu einer bestimmten Axialposition vorgeschoben werden, eben bis diese Ananas **100** an dem Gegenhalter **17** anliegt.

Der Einschieber **3** oder ein mit diesem axial fest verbundenes Element, zum Beispiel an dessen Schiebestange angeordnet, schiebt nunmehr die Halter für bestimmte Messer in die gewünschte Axialposition, abhängig von der Endlage des Einschiebers **3.**

In diesem Fall sind dies das vom festen Anschlag, dem Gegenhalter **17**, gegenüberliegende Abtrennmesser **12** und das Einschneidmesser **14**, die hierfür gemeinsam, unter Beibehaltung ihres vorgegebenen Abstandes entsprechend der Länge des Hohlzylinders **101**, axial eingestellt werden müssen.

### BEZUGSZEICHENLISTE

- **1**: Fruchtförderer
- **1'**: Förderrichtung
- **2**: Ablageposition
- **3**: Einschieber
- **4**: Schieberstempel
- **5**: Revolverscheibe
- **6**a - d: Durchgangsöffnung
- **7**: Zentriervorrichtung, Zentrierelement
- **8**: Ausschieber
- **9**: Abstand
- **10**: Drehachse
- **10'**: axiale Richtung
- **11**: Querrichtung
- **12**: Abtrennmesser
- **12**a: Schneidkante
- **13**:
- **14**: Einschneidmesser
- **15**: innere Stanzhülse
- **16**: äußere Stanzhülse
- **16**a: Schneidkante
- **17**: Gegenhalter
- **18**: Zusatzklinge
- **19**: Gehäuse
- **20**: Füllposition
- **21**: Schneidbereich
- **22**: Stanzposition
- **23**: Zufuhrseite
- **24**: Rutsche
- **25**: Abfuhrseite
- **26.**: Rutsche
- **27**: Aufnahmezylinder
- **28**: Ausnehmung

- **49**: Drehrichtung
- **50**: Steuerung

- **100**: Ananas
- **100'**: axiale Richtung Ananas
- **101**: hohlzylindrisches Stück
- **102**: hohlzylindrisches Stück
- **103**: Endkappe
- **104**: Schalen-Segment
- **105**: Zusatzscheibe
- LA: Länge Ananas
- DA: Durchmesser Ananas

- D: Durchmesser von **6**
- d: Dicke von **5**

## Patentansprüche

1. **Ananasschneider,** um aus einer Ananas (**100**) wenigstens ein hohlzylindrisches Stück **(101,102)** Ananas ohne Schale zu erzeugen, mit
- einer inneren Stanzhülse (**15**) und einer äußeren, hinsichtlich des Durchmessers größeren, Stanzhülse (**16**),
- einer in einem Grundgestell, insbesondere getaktet, drehbar um eine in axialer Richtung (**10'**) verlaufende Drehachse (**10**) angeordnete Revolverscheibe (**5**),
- auf dem gleichen Durchmesser der Revolverscheibe (**5**) über den Umfang, vorzugsweise gleichmäßig, verteilt angeordneten, axialen Durchgangsöffnungen (**6**a bis d) zur Aufnahme je einer Ananas (**100**),
- je einem Abtrennmesser (**12**) in axialer Richtung (**10'**) beidseits der Revolverscheibe (**5**), wobei
die Schneidkante (**12**a) jedes Abtrennmessers (**12**) in einer Radialebene zur axialen Richtung (**10'**) steht und den Radialbereich der Durchgangsöffnungen (**6**a bis d) überdeckt,
- einem in axialer Richtung (**10'**) bewegbaren Ausschieber (**8**),
**dadurch gekennzeichnet, dass**
in axialer Richtung (**10'**) zwischen der Revolverscheibe (**5**) und einem der Abtrennmesser (**12**) ein Einschneidmesser (**14**) angeordnet ist, dessen Schneidkante (**14**a) in radialer Richtung der Revolverscheibe (**5**) maximal **15** mm innerhalb desjenigen Radialbereiches der Revolverscheibe (**5**), in dem sich die äußere Stanzhülse (**16**) befindet, endet.

2. Ananasschneider nach Anspruch **1**,
**dadurch gekennzeichnet, dass**
die Schneidkante (**14**a) des Einschneidmessers (**14**) in radialer Richtung der Revolverscheibe (**5**) maximal **10** mm, besser maximal **5** mm, innerhalb desjenigen Radialbereiches der Revolverscheibe (**5**), in dem sich die äußere Stanzhülse (**16**) befindet, endet.

3. Ananasschneider nach einem der vorhergehenden Ansprüche,
**dadurch gekennzeichnet, dass**
in den Durchgangsöffnungen (**6**a bis d) Zentrierelemente (**7**) vorhanden sind zum radialen Zentrieren der Ananas (**100**) in der Durchgangsöffnung (**6**a - d).

4. Ananasschneider nach Anspruch 3,
**dadurch gekennzeichnet, dass**
die Zentrierelemente (**7**) in axialer Richtung (**10'**) verlaufende oder schräg dazu verlaufende, vorzugsweise plattenförmige, in das Innere der Durchgangsöffnung vorstehende Zentrierplatten (**7**) aus vorzugsweise elastischem Material sind
und/oder
jedes Zentrierelement (**7**) mit seinem radial äußeren Rand an einem in der axialen Richtung (**10'**) verlaufenden Aufnahme-Zylinder (**27**) befestigt ist, welcher um seine Längsachse in einer zylindrischen, zur Durchgangsöffnung (**6**a bis d) hin offenen, Ausnehmung (**28**) begrenzt verschwenkbar und insbesondere in der Schwenklage fixierbar ist.

5. Ananasschneider nach einem der vorhergehenden Ansprüche,
**dadurch gekennzeichnet, dass**
wenigstens eine Stanzhülse, insbesondere die innere Stanzhülse (**15**), axial beweglich ist
und/oder
die innere Stanzhülse (**15**) und der Ausschieber (**8**) axial neben und auf der gleichen Seite der Revolverscheibe (**5**) und parallel zu deren axialer Richtung (**10'**) an einer Stanzposition (**22**) der Vorrichtung so angeordnet sind, dass sie in die dortige Durchgangsöffnung (**6**b) der Revolverscheibe (**5**) eintauchen und die Revolverscheibe (**5**) vollständig durchdringen können.

6. Ananasschneider nach einem der vorhergehenden Ansprüche,
**dadurch gekennzeichnet, dass**
die äußere, größere Stanzhülse (**16**) feststehend und vorzugsweise koaxial fluchtend zur inneren Stanzhülse (**15**) auf der anderen Seite der Revolverscheibe (**5**) und insbesondere an der gleichen Stanzposition (**22**) angeordnet ist
und/oder
die innere Stanzhülse (**15**) einen im axialen Verlauf gleich bleibenden Innendurchmesser und Außendurchmesser aufweist.

7. Ananasschneider nach einem der vorhergehenden Ansprüche,
**dadurch gekennzeichnet, dass**
die innere Stanzhülse (**15**) und der insbesondere ringförmige oder RingSegment-förmige axial wirkende Ausschieber (**8**) koaxial zueinander angeordnet sind an einer gemeinsamen Stanzposition (**22**), jedoch unabhängig voneinander axial bewegbar
und/oder
die innere Stanzhülse (**15**), die äußere, hinsichtlich des Durchmessers größere, Stanzhülse (**16**), und der Ausschieber (**8**) an der gleichen Umfangsposition, der Stanzposition (**22**), der Vorrichtung angeordnet sind.

8. Ananasschneider nach einem der vorhergehenden Ansprüche,
**dadurch gekennzeichnet, dass**
von der äußeren Stanzhülse (**16**), insbesondere nahe an oder direkt an deren vorderer Schneidkante (**16** a), radial nach außen abstehende Zusatzklingen (**18**) angeordnet sind
und/oder
die äußere Stanzhülse (**16**) einen in axialer Richtung gleich bleibenden Innendurchmesser jedoch einen von der Schneidkante (**16**a) aus nach hinten zunehmenden Außendurchmesser aufweist.

9. Ananasschneider nach einem der vorhergehenden Ansprüche,
**dadurch gekennzeichnet, dass**
die Messer (**12, 14**) stillstehende, in einem spitzen Winkel zur radialen Richtung stehende, oder in einer Radialebene zur Revolverscheibe (**5**) bewegliche Messer sind.

10. Ananasschneider nach einem der vorhergehenden Ansprüche,
**dadurch gekennzeichnet, dass**
an einer Füllposition auf der einen Seite der Revolverscheibe (**5**) ein Einschieber (**3**) zum Einschieben einer Ananas in eine dortige Durchgangsöffnung (**6**a) axial beweglich in Richtung der Revolverscheibe (**5**) angeordnet ist und auf der anderen Seite ein in seiner axialen Position fixierbarer Gegenhalter (**17**) angeordnet ist, und die axiale Lage der Ananas (**100**) in der Durchgangsöffnung (**6**a) entweder durch die Axialposition des Gegenhalters (**17**) oder durch die ausgefahrene Position des Einschiebers (**3**) festlegt wird, wobei im letzteren Fall der Gegenhalter (**17**) in axialer Richtung gefedert ist.

11. Ananasschneider nach einem der vorhergehenden Ansprüche,
**dadurch gekennzeichnet, dass**
wenigstens ein Abtrennmesser (**12**) in axialer Richtung (**10'**) einstellbar ist und insbesondere automatisch eingestellt wird in Abhängigkeit der axialen Position der jeweiligen Ananas (**100**) in der Revolverscheibe (**5**) und/oder der Länge (LA) der jeweiligen Ananas (**100**), insbesondere mithilfe einer in axialer Richtung (**10'**) beweglichen Schleppvorrichtung (**13**), an der zumindest ein Abtrennmesser (**12**), ggf. auch das an der gegenüberliegenden Seite der Revolverscheibe (**5**) angeordnete Einschneidmesser (**14**), befestigt sind, abhängig davon, auf welcher Seite die fixe axiale Endposition der Ananas durch den Ananasschneider vorgegeben wird.

12. Ananasschneider nach einem der vorhergehenden Ansprüche,
**dadurch gekennzeichnet, dass**
ein Fruchtförderer (**1**) vorhanden ist, der in der Lage ist, jeweils eine Ananas (**100**) mit ihrer axialen Richtung (**100'**) fluchtend zur axialen Richtung (**10'**) der Revolverscheibe (**5**) vor einer Durchgangsöffnung (**6**a) in der Füllposition (**20**) der Vorrichtung zu positionieren, und der Fruchtförderer (**1**) insbesondere mit seiner Förderrichtung (**1'**) radial zur axialen Richtung (**10'**) verläuft, so dass die Ananas (**100**) mit ihrer axialen Richtung (**100'**) quer zur Förderrichtung (**1'**) auf dem Fruchtförderer (**1**) aufliegen.

13. Ananasschneider nach einem der Ansprüche 10 bis 12,
**dadurch gekennzeichnet, dass**
der Ananasschneider eine Steuerung (**50**) umfasst, die
- die Revolverscheibe (**5**) getaktet in immer die gleiche Drehrichtung (**49**) weiterdreht um jeweils den Zwischenwinkel zwischen zwei in Umfangsrichtung aufeinanderfolgenden Durchgangsöffnungen (**6**a - d),
- jeweils dazwischen, bei Stillstand der Revolverscheibe (**5**),
- an der Füllposition (**20**) den Einschieber (**3**) aktiviert zum Einschieben einer Ananas (**100**) in die dortige Durchgangsöffnung (**6**a),
- an der Stanzposition (**22**) die innere Stanzhülse (**15**) und den Ausschieber (**8**) aktiviert zum Ausschieben einer Ananas (**100**) aus der Revolverscheibe (**5**) und Überschieben über die axial neben der Revolverscheibe (**5**) angeordnete äußere Stanzhülse (**16**).

## Claims

1. Pineapple cutter for producing from a pineapple (100) at least one hollow cylindrical piece (101, 102) of pineapple without rind, comprising
- an inner punch sleeve (15) and an outer punch sleeve (16) which is larger in diameter,
- a turret disc (5) arranged in a base frame, rotatable, in particular clocked, about an axis of rotation (10) extending in the axial direction (10'),
- axial through-openings (6a to d) for receiving a pineapple (100) each, which are arranged on the same diameter of the turret disc (5), preferably evenly distributed over the circumference,
- one cut-off knife (12) each in the axial direction (10') on both sides of the turret disc (5), wherein
- the cutting edge (12a) of each cut-off knife (12) is located in a radial plane to the axial direction (10') and covers the radial area of the through openings (6a to d),
- a pusher (8) movable in the axial direction (10'),
**characterized in that**
in the axial direction (10') between the turret disc (5) and one of the cut-off knives (12) there is arranged a cut-in knife (14), the cutting edge (14a) of which ends in the radial direction of the turret disc (5) by a maximum of 15 mm within that radial region of the turret disc (5) in which the outer punching sleeve (16) is located.

2. Pineapple cutter according to claim 1,
**characterized in that**
the cutting edge (14a) of the cut-in knife (14) ends in the radial direction of the turret disc (5) by a maximum of 10 mm, preferably by a maximum of 5 mm, within that radial area of the turret disc (5) in which the outer punching sleeve (16) is located.

3. Pineapple cutter according to one of the preceding claims,
**characterized in that**
centering elements (7) are provided in the through-openings (6a to d) for radial centering of the pineapple (100) in the through- opening (6a - d).

4. Pineapple cutter according to claim 3,
**characterized in that**
- the centering elements (7) are centering plates (7) of preferably elastic material which extend in the axial direction (10') or at an angle thereto and are preferably plate-shaped and project into the interior of the through-openings
and/or
- each centering element (7) is fastened with its radially outer edge to a receiving cylinder (27) which extends in the axial direction (10') and can be pivoted to a limited extent about its longitudinal axis in a cylindrical recess (28) open towards the through-opening (6a to d) and in particular can be fixed in the pivoted position.

5. Pineapple cutter according to one of the preceding claims,
**characterized in that**
- at least one punch sleeve, in particular the inner punch sleeve (15), is axially movable
and/or
- the inner punch sleeve (15) and the pusher (8) are arranged axially next to and on the same side of the turret disc (5) and parallel to its axial direction (10') at a punching position (22) of the device in such a way that they can enter the through-opening (6b) of the turret disc (5) there and pierce the turret disc (5) completely.

6. Pineapple cutter according to one of the preceding claims,
**characterized in that**
- the outer, larger punch sleeve (16) is arranged fixedly and preferably coaxially aligned with the inner punch sleeve (15) on the other side of the turret disc (5) and in particular at the same punching position (22)
and/or
- the inner punch sleeve (15) has a constant inner and outer diameter in the axial course.

7. Pineapple cutter according to any of the preceding claims,
**characterized in that**
- the inner punch sleeve (15) and the, in particular, annular or ring-segment-shaped axially acting pusher (8) are arranged coaxially to each other at a common punching position (22), but are axially movable independently of each other
and/or
- the inner punch sleeve (15), the outer punch sleeve (16), which is larger in diameter, and the pusher (8) are arranged at the same peripheral position, the punching position (22), of the device.

8. Pineapple cutter according to any of the preceding claims,
**characterized in that**
- additional knives (18) projecting radially outwards from the outer punching sleeve (16), in particular close to or directly at the front cutting edge (16a)
and/or
- the outer punch sleeve (16) has a constant inner diameter in the axial direction but an outer diameter which increases from the cutting edge (16a) towards the rear.

9. Pineapple cutter according to any of the preceding claims,
**characterized in that**
the knives (12, 14) are stationary, at an acute angle to the radial direction, or movable in a radial plane to the turret disc (5).

10. Pineapple cutter meeting any of the preceding claims,
**characterized in that**
at a filling position on one side of the revolving disc (5), a in-pusher (3) for pushing a pineapple into a through-opening (6a) there is arranged so as to be axially movable in direction to the revolving disc (5) and on the other side a counterholder (17) which can be fixed in its axial position is arranged, and the axial position of the pineapple (100) in the through- opening (6a) is determined either by the axial position of the counter-holder (17) or by the extended position of the in-pusher (3), in the latter case the counter-holder (17) being springloaded in the axial direction.

11. Pineapple cutter according to one of the preceding claims,
**characterized in that**
at least one cut-off knife (12) is adjustable in the axial direction (10') and in particular is adjusted automatically as a function of the axial position of the respective pineapple (100) in the revolving disc (5) and/or the length (LA) of the respective pineapple (100), in particular with the aid of a trailing device (13) which is movable in the axial direction (10') and on which at least one cut-off knife (12), possibly also the cut-off knife (14) arranged on the opposite side of the revolving disc (5), depending on the side on which the fixed axial end position of the pineapple is predetermined by the pineapple cutter.

12. Pineapple cutter according to any of the preceding claims,
**characterized in that**
there is a fruit conveyor (1), which is capable of positioning a pineapple (100) with its axial direction (100') aligned with the axial direction (10') of the turret disc (5) in front of a through-opening (6a) in the filling position (20) of the device, and in particular the fruit conveyor (1) with its conveying direction (1') running radially to the axial direction (10'), so that the pineapple (100) rests on the fruit conveyor (1) with its axial direction (100') transverse to the conveying direction (1').

13. Pineapple cutter according to one of claims 10 to 12,
**characterized in that**
the pineapple cutter comprises a control unit (50) which
- continues to rotate the turret disc (5) in the same direction of rotation (49) in a clocked manner by the intermediate angle between two successive through-openings (6a - d) in the circumferential direction each,
- in each case in between, when the turret disk (5) is at a standstill,
- at the filling position (20) the in-pusher (3) is activated to push a pineapple (100) into the through-opening (6a) there,
- at the punching position (22) activates the inner punch sleeve (15) and the pusher (8) for pushing a pineapple (100) out of the turret disc (5) and over the outer punch sleeve (16) arranged axially next to the turret disc (5).

## Revendications

1. **Trancheur d'ananas** pour produire au moins une pièce cylindrique creuse (101, 102) d'ananas sans peau à partir d'un ananas (100), avec
- un manchon de poinçonnage intérieur (15) et un manchon de poinçonnage extérieur (16), de plus grand diamètre,
- un disque de tourelle (5) agencé dans un support de base, notamment cadencé, disposé de manière à pouvoir tourner autour d'un axe de rotation (10) s'étendant dans la direction axiale (10'),
- des ouvertures axiales de passage (6a à d) pour recevoir chacune un ananas (100), disposées sur le même diamètre du disque de tourelle (5), de préférence réparties uniformément sur la circonférence,
- une lame de coupe (12) respective dans la direction axiale (10') des deux côtés du disque de tourelle (5), dans lequel
- le bord tranchant (12a) de chaque lame de coupe (12) se trouve dans un plan radial par rapport à la direction axiale (10') et couvre la région radiale des ouvertures de passage (6a à d),
- un éjecteur (8) mobile dans la direction axiale (10'),
**caractérisé en ce que**
une lame d'incision (14) est disposée dans la direction axiale (10') entre le disque de tourelle (5) et l'une des lames de coupe (12), dont le bord tranchant (14a) se termine dans la direction radiale du disque de tourelle (5) sur une longueur maximale de 15 mm dans la zone radiale du disque de tourelle (5) dans laquelle se trouve le manchon de poinçonnage extérieure (16).

2. Trancheur d'ananas selon la revendication 1,
**caractérisé en ce que**
le bord tranchant (14a) de la lame d'incision (14) se termine dans la direction radiale du disque de tourelle (5) à un maximum de 10 mm, de préférence à un maximum de 5 mm, dans la région radiale du disque de tourelle (5) dans laquelle se trouve le manchon de poinçon extérieure (16).

3. Trancheur d'ananas selon l'une des revendications précédentes,
**caractérisé en ce que**
des éléments de centrage (7) sont prévus dans les ouvertures de passage (6a à d) pour centrer radialement l'ananas (100) dans l'ouverture de passage (6a - d).

4. Trancheur d'ananas selon la revendication 3,
**caractérisé en ce que**
les éléments de centrage (7) sont des plaques de centrage (7) en matériau de préférence élastique qui s'étendent dans la direction axiale (10') ou sont inclinées par rapport à celle-ci, de préférence en forme de plaque, et qui font saillie à l'intérieur de l'ouverture de passage,
et/ou
chaque élément de centrage (7) est fixé par son bord radialement extérieur à un cylindre de réception (27) s'étendant dans la direction axiale (10'), qui peut être pivoté de manière limitée autour de son axe longitudinal dans un évidement cylindrique (28) ouvert vers l'ouverture de passage (6a à d) et peut être fixé en particulier dans la position pivotée.

5. Trancheur d'ananas selon l'une des revendications précédentes,
**caractérisé en ce que**
au moins un manchon de poinçonnage, en particulier le manchon de poinçonnage intérieur (15), est mobile axialement
et/ou
le manchon de poinçonnage intérieur (15) et l'éjecteur (8) sont disposés axialement à côté et sur le même côté du disque de tourelle (5) et parallèlement à sa direction axiale (10') à une position de poinçonnage (22) du dispositif de telle sorte qu'ils peuvent pénétrer dans l'ouverture de passage (6b) du disque de tourelle (5) et passer complètement à travers le disque de tourelle (5).

6. Trancheur d'ananas selon l'une des revendications précédentes,
**caractérisé en ce que**
le manchon de poinçonnage extérieur (16), plus grand, est disposé de manière fixe et de préférence coaxialement aligné avec le manchon de poinçonnage intérieur (15) de l'autre côté du disque de tourelle (5) et en particulier à la même position de poinçonnage (22),
et/ou
le manchon de poinçonnage intérieur (15) présente un diamètre intérieur et un diamètre extérieur qui restent constants dans le sens axial.

7. Trancheur d'ananas selon l'une des revendications précédentes,
**caractérisé en ce que**
le manchon de poinçonnage intérieure (15) et l'éjecteur (8) agissant axialement, en particulier en forme d'anneau ou de segment d'anneau, sont disposés coaxialement l'un par rapport à l'autre à une position de poinçonnage commune (22), mais sont mobiles axialement indépendamment l'un de l'autre,
et/ou
le manchon de poinçonnage intérieure (15), le manchon de poinçonnage extérieure (16), de plus grand diamètre, et l'éjecteur (8) sont disposés à la même position périphérique, la position de poinçonnage (22), du dispositif.

8. Trancheur d'ananas selon l'une des revendications précédentes,
**caractérisé en ce que**
des lames supplémentaires (18) faisant saillie radialement vers l'extérieur du manchon de poinçonnage extérieure (16), en particulier à proximité ou directement sur son bord tranchant avant (16a), sont disposées,
et/ou
le manchon de poinçonnage extérieure (16) présente un diamètre intérieur constant dans la direction axiale mais un diamètre extérieur augmentant vers l'arrière à partir du bord tranchant (16a).

9. Trancheur d'ananas selon l'une des revendications précédentes,
**caractérisé en ce que**
les lames (12, 14) sont des lames fixes, faisant un angle aigu avec la direction radiale, ou mobiles dans un plan radial par rapport au disque de tourelle (5).

10. Trancheur d'ananas selon l'une des revendications précédentes,
**caractérisé en ce que**
un poussoir (3) pour pousser un ananas dans une ouverture de passage (6a) est disposé à une position de remplissage sur un côté du disque de tourelle (5) de manière à être mobile axialement en direction du disque de tourelle (5) et un contre-support (17) pouvant être fixé dans sa position axiale est disposé sur l'autre côté, et la position axiale de l'ananas (100) dans l'ouverture de passage (6a) est déterminée soit par la position axiale du contre-support (17), soit par la position sortie du poussoir (3), dans ce dernier cas le contre-support (17) étant chargé par un ressort dans la direction axiale.

11. Trancheur d'ananas selon l'une des revendications précédentes,
**caractérisé en ce que**
au moins une lame de coupe (12) est réglable dans la direction axiale (10') et en particulier est réglé automatiquement en fonction de la position axiale de l'ananas (100) respectif dans le disque de tourelle (5) et/ou de la longueur (LA) de l'ananas (100) respectif, en particulier à l'aide d'un dispositif de traction (13) mobile dans la direction axiale (10'), sur lequel est fixé au moins une lame de coupe (12), le cas échéant en outre la lame de coupe (14) disposé sur le côté opposé du disque de tourelle (5) en fonction du côté sur lequel la position finale axiale fixe de l'ananas est prédéterminée par le trancheur d'ananas.

12. Trancheur d'ananas selon l'une des revendications précédentes,
**caractérisé en ce que**
il est prévu un convoyeur de fruits (1) qui est capable de positionner un ananas (100) à la fois avec sa direction axiale (100') alignée avec la direction axiale (10') du disque de tourelle (5) devant une ouverture de passage (6a) dans la position de remplissage (20) du dispositif, et **en ce que** le transporteur de fruits (1) s'étend en particulier avec sa direction de transport (1') radiale par rapport à la direction axiale (10'), de sorte que l'ananas (100) repose sur le transporteur de fruits (1) avec sa direction axiale (100') transversale par rapport à la direction de transport (1').

13. Trancheur d'ananas selon l'une des revendications 10 à 12,
**caractérisé en ce que**
le trancheur d'ananas comporte une commande (50) qui,
- continue à faire tourner le disque de tourelle (5) de manière cadencée dans un sens de rotation (49) toujours identique, à chaque fois par l'angle intermédiaire entre deux ouvertures de passage (6a-d) se suivant dans la direction périphérique,
- à chaque fois entre celles-ci, lorsque le disque de tourelle (5) est à l'arrêt,
- au niveau de la position de remplissage (20), actionne le poussoir (3) pour pousser un ananas (100) dans l'ouverture de passage (6a) située à cet endroit,
- au niveau de la position de poinçonnage (22), actionne le manchon de poinçonnage intérieur (15) et l'éjecteur (8) pour pousser un ananas (100) hors du disque de tourelle (5) et sur le manchon de poinçonnage extérieur (16) disposé axialement à côté du disque de tourelle (5).
